# EUROPÄISCHE PATENTSCHRIFT

(11) **EP 1 981 675 B1**
(45) Veröffentlichungstag und Bekanntmachung des Hinweises auf die Patenterteilung: **26.10.2011**
(21) Anmeldenummer: 07703097.1
(22) Anmeldetag: 29.01.2007
(51) Int. Cl.: B23K 1/20, B23K 3/08

(54) **VERFAHREN ZUR HERSTELLUNG EINES METALLTEILS**
METHOD FOR PRODUCING A METAL PART
PROCÉDÉ DE PRODUCTION D'UNE PIÈCE MÉTALLIQUE

(30) Priorität: 30.01.2006 DE 102006004347
(43) Veröffentlichungstag der Anmeldung: 22.10.2008
(73) Patentinhaber: Behr GmbH & Co. KG, 70469 Stuttgart (DE)
(72) Erfinder: ENGLERT, Peter, 74177 Bad Friedrichshall (DE); GRÜNENWALD, Bernd, 72622 Nürtingen (DE); TÜRPE, Matthias, 71672 Marbach a. N. (DE)
(86) Internationale Anmeldenummer: PCT/EP2007/000737
(87) Internationale Veröffentlichungsnummer: WO 2007/085484

(56) Entgegenhaltungen:
- EP-A- 1 004 386
- US-A- 5 139 822
- US-A1- 2003 136 817

## Beschreibung

Die Erfindung betrifft ein Verfahren zur Herstellung eines Metallteils nach dem Oberbegriff des Anspruchs 1.

Ein derartiges Verfahren ist aus US 5 139 822 bekannt, das die Merkmale des Oberbegriffs des Anspruchs 1 zeigt.

Es ist allgemein bekannt, bei der Herstellung von Metallteilen eine Flussmittelzusammensetzung auf eine Oberfläche aufzubringen, um eine nachfolgende Verlötung zu ermöglichen. Es kann sich dabei um eine Flussmittelzusammensetzung handeln, die bereits Lotbestandteile wie etwa Metallpulver enthält oder auch um ein reines Flussmittel, das z. B. auf eine mit metallischem Lot flächig plattierte Oberfläche aufgebracht wird.

WO 01/38040 A1 beschreibt die Herstellung eines Aluminiumprodukts, wobei ein Blech oder Profil von einer Rolle zugeführt wird und nachfolgend über eine Auftragsrolle flächig mit einem Flussmittel beschichtet wird. Nachfolgend wird der Auftrag in einer Heizeinrichtung getrocknet und das Blech wird wieder zu einer Rolle gewickelt. Für diesen flächigen Auftrag werden erhebliche Mengen an Flussmittel und organischem Binder benötigt, welche zudem bei späteren Anwendungen des beschichteten Materialstrangs überschüssig sein und störende Wirkungen aufweisen können.

Es ist die Aufgabe der Erfindung, ein Verfahren zur Herstellung eines Metallteils anzugeben, bei dem die aufgebrachte Menge an Flussmittel verringert ist.

Diese Aufgabe wird für ein eingangs genanntes Verfahren erfindungsgemäß mit den kennzeichnenden Merkmalen des Anspruchs 1 gelöst. Durch die Aufbringung der Flussmittelzusammensetzung nur auf einen definierten Teil der Oberfläche mittels der Auftragsvorrichtung wird bei einem automatisiertem und somit kostengünstigem Auftrag zugleich ermöglicht, eine erheblich geringere oder gar keine Fläche mit Flussmittel zu beschichten, die später keinem Lötprozess unterzogen wird. Hierdurch wird überschüssiges Flussmittel beim fertigen Produkt vermieden. Zudem wird die Menge an benötigtem Flussmittel kostengünstig verringert. Der Materialstrang ist allgemein ein Band oder Blech oder ein Profil; er kann als Stangenmaterial, als Rollenmaterial oder in sonstiger Weise als endloser oder quasi-endloser Materialvorrat vorliegen. Insbesondere kann der Materialstrang im Sinne der Erfindung auch von in seiner Förderrichtung veränderlichem Querschnitt sein.

Besonders bevorzugt umfasst die Auftragsvorrichtung eine Auftragsrolle, so dass ein zuverlässiger und einfacher Auftrag des Flussmittels durch aufrollen ermöglicht ist. Allgemein können jedoch auch andere Auftragsmittel vorgesehen sein, wie etwa Siebdruck-Vorrichtungen.

In bevorzugter Ausführung umfasst das Verfahren ferner den Schritt, mehrere Abschnitte des Materialstrangs zur Vereinzelung von beschichteten Metallteilen abzulängen. Somit erfolgt eine Vereinzelung der Metallteile erst nach dem definiert teilflächigem Auftrag des Flussmittels auf einen endlosen oder quasi-endlosen Materialstrang, wodurch insgesamt ein hoher Automatisierungsgrad gegenüber dem Stand der Technik ermöglicht ist.

Auf einfache Weise wird der nur teilweise Auftrag vorteilhaft dadurch ermöglicht, dass die Auftragsrolle eine mit dem definierten Teil der Oberfläche des Materialstrangs korrespondierende Struktur aufweist. Es kann sich jedoch auch um eine Auftragsrolle ohne strukturierte Oberfläche handeln, wobei ein definierter nur teilweiser Auftrag der Flußmittelzusammensetzung auf die Auftragsrolle durch andere Mittel erfolgt, beilspielsweise selektives Aufspritzen des Flussmittels.

Bevorzugt besteht der Materialstrang aus einer Aluminiumlegierung. Für Aluminiumlegierungen sind eine Vielzahl von automatisiert auftragbaren Flussmittelzusammensetzungen bekannt. Eine bevorzugte Flussmittelzusammensetzung wird dabei in der EP 1 287 941 A1 beschrieben.

In einer geeigneten Ausführung weist die Oberfläche des zugeführten Materialstrangs bereits eine zumindest teilweise Plattierung aus einem Lot auf. Es ist vorgesehen, dass die Flussmittelzusammensetzung einen metallischen Bestandteil, insbesondere pulverförmiges Metall, oder einen chemisch gebundenen, während des Lötprozesses metallisch werdenden Bestandteil enthält. Ein Beispiel ist das Produkt Silflux der Firma Solvay. Eine Flußmittelzusammensetzung im Sinne der Erfindung kann es auch durch Reaktionen während des Lötvergangs ermöglichten, dass aus der Oberfläche des Materialstrangs selbst das Lot entsteht.

In einem bevorzugen Ausführungsbeispiel werden die Abschnitte und/oder der Materialstrang zu Rohren eines Wärmetauschers umgeformt. Besonders bevorzugt sind die Rohre dabei Flachrohre, die insbesondere bevorzugt wenigstens eine Sicke oder einen Steg zur Abtrennung separater Kammern innerhalb des Rohres aufweisen. Besonders bei solchen mit Sicken oder Stegen versehenen Flachrohren ist eine Verlötung entlang der im Innenraum des Rohres anstoßenden Sicken oder Stege gewünscht, um eine hermetische Abriegelung separater paralleler Kammern zu gewährleisten. Zugleich sollte die Menge des innerhalb des Rohres vorhandenen Flussmittels begrenzt sein, damit keine Kontamination eines später im Wärmetauscher eingesetzten Kühlmittels stattfindet und keine Flussmittelreste Engstellen des Wärmetauschers verstopfen oder sich dort absetzen können.

In einer weiteren bevorzugten Ausführungsform nicht gemäß der Erfindung werden die Abschnitte und/oder der Materialstrang zu Sammlerkästen eines Wärmetauschers umgeformt. Es sind Ganzaluminium-Wärmetauscher bekannt, bei denen stirnseitige Sammlerkästen aus Aluminium ein im wesentlichem U-förmiges Profil aufweisen, wobei die endseitigen Teile der Innenflächen der Schenkel des Profils mit Tauscherrohren flächig verlötet werden. An diesen Lötflächen sind relativ große Mengen von Lot und Flußmittel erforderlich. Um einen Überschuss von Flussmittelzusammensetzung im Inneren des Wärmetauschers zu vermeiden, sind im Sinne der Erfindung vorteilhaft nur diese Randbereiche, bei denen es tatsächlich zu einer Verlötung mit anderen Bauteilen kommt, mit einem Flussmittelauftrag versehen. Die Abschnitte können auch zu Böden, Seitenteilen oder anderen Komponenten eines Wärmetauschers umgeformt werden.

Für geeignete bevorzugte Ausführungsformen ist es vorgesehen, dass der definierte Teil der Oberfläche wenigstens einen, insbesondere eine Mehrzahl von in Zuführrichtung des Materialstranges durchgehenden Streifen umfasst. Bei einer solchen selektiven Auftragsweise kann beispielsweise eine auch eine zumindest teilweise Umformung des Materialstrangs vorteilhaft erfolgen, bevor eine Vereinzelung in einzelne Metallteile erfolgt. Alternativ oder ergänzend kann der definierte Teil der Oberfläche auch wenigstens eine in Zuführrichtung des Materialstrangs nicht durchgehende, sich in regelmäßigen Abständen wiederholende Struktur umfassen. Die Gestaltung des definierten Teils der mit der Flussmittelzusammensetzung versehenen Oberfläche des Materialstrangs hängt dabei lediglich von den konkreten Anforderungen an die weitere Herstellung der Metallteile ab.

In einer vorteilhaften Weiterentwicklung des erfindungsgemäßen Verfahrens werden die definierten Teile der Oberfläche zumindest teilweise als geprägte Vertiefung ausgebildet, insbesondere mittels einer der Auftragsrolle vorgeordneten Prägerolle. Hierdurch kann es zumindest teilweise oder auch vollständig erreicht werden, dass der Auftrag der Flussmittelzusammensetzung keine Erhöhung des Durchmessers des Materialstrangs bewirkt, indem die Flussmittelzusammensetzung lokal am Ort der Vertiefungen aufgetragen wird. Dies ist insbesondere bei Bauteilen vorteilhaft, bei denen eine Stapeiung einer Vielzahl von Einzelteilen bedingt durch an jedem Einzelteil vorhandene Flussmittelschichten eine summarische Maßtoleranz des Stapels in Frage stellen würde.

Bei einer alternativen oder ergänzenden Ausführungsform der Erfindung umfasst die Auftragsvorrichtung eine Spritzvorrichtung zum Aufspritzen und/oder Aufsprühen der Flussmittelzusammensetzung auf den Materialstrang. Durch den Vorgang des Aufspritzens oder Aufsprühens mittels einer entsprechenden Spritzvorrichtung kann die Flussmittelzusammensetzung kostengünstig und zuverlässig aufgebracht werden. Besonders vorteilhaft umfasst die Spritzvorrichtung dabei eine Mehrzahl von separat ansteuerbar ren Spritzdüsen. Die Spritzvorrichtung und/oder die Spritzdüsen können bewegbar ausgestaltet sein und/oder im Intervallbetrieb oder mit veränderlicher Auftragsmenge arbeiten, so dass je nach Anforderungen eine Strukturierung der aufgetragenen Flussmittelzusammensetzung erfolgen kann.

In einer weiteren vorteilhaften Ausführungsform weist die aufgetragene Flussmittelzusammensetzung zumindest einen gradierten Bereich auf. Unter einem gradierten Bereich ist dabei allgemein ein Bereich veränderlicher Dicke oder Dichte der Flussmittelzusammensetzung zu verstehen. Die Gradierung kann insbesondere in Zuführrichtung oder auch senkrecht dazu bestehen.

Eine erfindungsgemäße Vorrichtung zur Herstellung des Metallteils nach Anspruch 19 weist die Merkmale nach Anspruch 20 auf. Durch die Strukturierung der Oberfläche der Auftragsrolle ist eine erhebliche Verringerung eines überflüssigen Flussmittelauftrags gegenüber dem Stand der Technik bei einer automatisierten Aufbringung der Flussmittelzusammensetzung ermöglicht. In bevorzugter Ausführung umfasst die Vorrichtung zur Herstellung des Metallteils zudem eine der Auftragsrolle vorgeordnete Prägerolle zur Einbringung von Vertiefungen in den Materialstrang auf. In besonders bevorzugter Ausführung sind der Auftragsrolle Mittel zur Vereinzelung von Abschnitten des Materialstrangs nachgeordnet, so dass eine hohe Integration von automatisierten Herstellungsschritten Zur Erlangung des Metallteils in einer gemeinsamen Herstellungsvorrichtung vorliegt.

Vorteilhaft ist eine Vorrichtung zur Herstellung eines Metallteils, umfassend Mittel zur Zuführung des Materialstrangs, eine Auftragsvorrichtung zum Auftrag der Flußmittelzusammensetzung, wobei die Auftragsvorrichtung eine Oberflächenstruktur aufweiset, die mit dem definierten Teil der Oberfläche des Materialstrangs korrespondiert, und Mittel zur Aufbringung der Flußmittelzusammensetzung auf die Auftragsvorrichtung.

Vorteilhaft ist, dass die Auftragsvorrichtung eine Auftragsrolle umfasst.

Vorteilhaft ist eine Vorrichtung, ferner umfassend eine der Auftragsrolle vorgeordnete Prägerolle zur Einbringung von Vertiefungen in den Materialstrang.

Vorteilhaft ist, dass der Auftragsrolle Mittel zur Vereinzelung von Abschnitten des Materialstrangs nachgeordnet sind.

Vorteilhaft ist eine Vorrichtung zur Herstellung eines Metallteils, umfassend Mittel zur Zuführung des Materialstrangs, und eine Auftragsvorrichtung (1) zum Auftrag der Flußmittelzusammensetzung, wobei die Auftragsvorrichtung eine Spritzvorrichtung zum Aufspritzen und/oder Aufsprühen der Flussmittelzusammensetzung auf den Materialstrang umfasst.

Diese und weitere Merkmale ergeben sich aus den nachfolgend beschriebenen Ausführungsbeispielen sowie aus den abhängigen Ansprüchen. Nachfolgend wird ein bevorzugtes Ausführungsbeispiel eines erfindungsgemäßen Verfahrens beschrieben und anhand der anliegenden Zeichnungen näher erläutert.
- Fig. 1 bis Fig. 7: zeigen sieben verschiedene schematische Darstellengen von Auftragsrollen mit strukturierten Oberflächen sowie jeweils die schematische Darstellung der durch die Auftragsrollen bedingten Beschichtung auf einen Materialstrang.
- Fig. 8: zeigt eine skizzenhafte Querschnittsansicht eines gelöteten Wärmetauscherrahres.
- Fig. 9: zeigt eine schematische Schnittansicht eines gelöteten Wärmetauschers mit metallenen Sammlerkästen nicht gemäß der Erfindung.
- Fig. 10: zeigt eine schematische Darstellung eines weiteren Ausführungsbeispiels der Erfindung.
- Fig. 11: zeigt eine Schnittansicht durch einen Materialstrang mit gradierten Beschichtungen quer zu der Zuführrichtung.
- Fig. 12: zeigt eine Schnittansicht durch einen Materialstrang mit gradierten Beschichtungen längs zu der Zuführrichtung.

Bei einem erfindungsgemäßen Verfahren liegt zunächst ein Materialstrang aus mit Lot vollständig flächig plattiertem Aluminiumblech als Rollenmaterial vor. Das Blech wird mittels einer Zuführeinrichtung einer Auftragsvorrichtung zur automatisierten Auftragung einer Flussmittelzusammensetzung zugefährt. Die Auftragsvorrichtung umfasst eine Auftragsrolle 1, welche eine strukturierte Oberfläche 1a - 1g hat. Eine Flussmittelzusammensetzung von pastöser Konsistenz wird aus einem Vorratsbehälter auf die Auftragsrolle 1 aufgebracht, wonach sie durch Abrollen der Auftragsrolle entlang des bewegten Materialstrangs auf diesen übertragen wird.

Dadurch bedingt, dass die Auftragsrolle 1 eine strukturierte Oberfläche aufweist, wird die Flussmittelzusammensetzung nur über die vorstehenden Bereichen der strukturierten Oberfläche aufgebracht und/oder nur von diesem Bereichen auf den Materialstrang übertragen. Hierdurch erfolgt eine Auftragung der Flussmittelzusammensetzung nur auf definierte Teile der Oberfläche des durchlaufenden Materialstrangs.

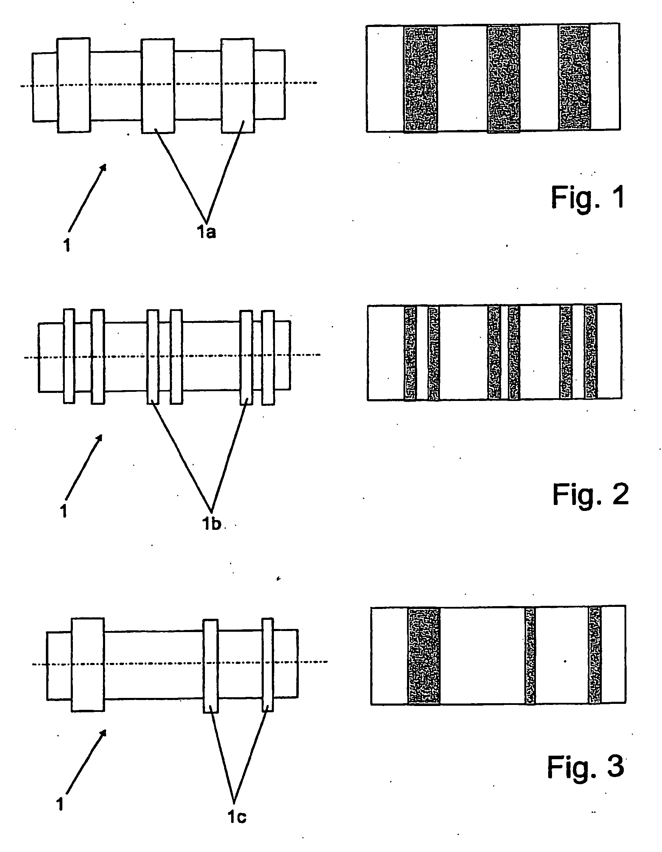

In den Zeichnungen Fig. 1 bis Fig. 7 sind sieben beispielhafte Strukturierungen von Auftragsrollen 1a-1g schematisch dargestellt. In den Beispielen nach Fig. 1 bis Fig. 3 hat die Rolle dabei vollständig umlaufende parallele Ringe. Hierdurch wird eine Beschichtung des Materialstrangs in Form von durchgehenden Streifen in seiner Förderrichtung erzielt. Anzahl, Breite und Verteilung der Streifen in Querrichtung des Materialstrangs sind dabei in Abhängigkeit von den jeweiligen Anforderungen frei wählbar.

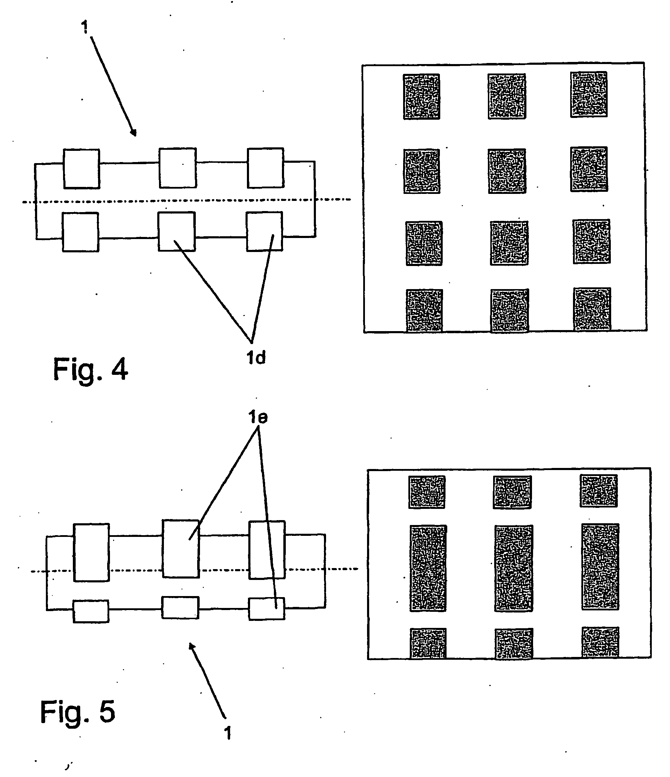

In den Beispielen gemäß Fig. 4 und Fig. 5 weisen die erhabenen Bereiche der Auftragsrolle nicht nur senkrecht zur Abrollrichtung, sondern auch in Abrollrichtung Unterbrechungen auf. Dementsprechend ergeben sich in Zuführrichtung des Materialstrangs unterbrochene Bedruckungen mit Flussmittelzusammensetzung. Bei dem Beispiel nach Fig. 4 sind sämtliche der bedruckten Flächen in Zuführrichtung mit gleichem Abstand voneinander versehen. In Fig. 5 wechseln sich bedruckte Flächen von unterschiedlicher Länge in Zuführrichtung ab. Eine Wiederholung des Musters ergibt sich im Beispiel nach Fig. 5 erst nach einer vollständigen Umdrehung der Auftragsrolle 1.

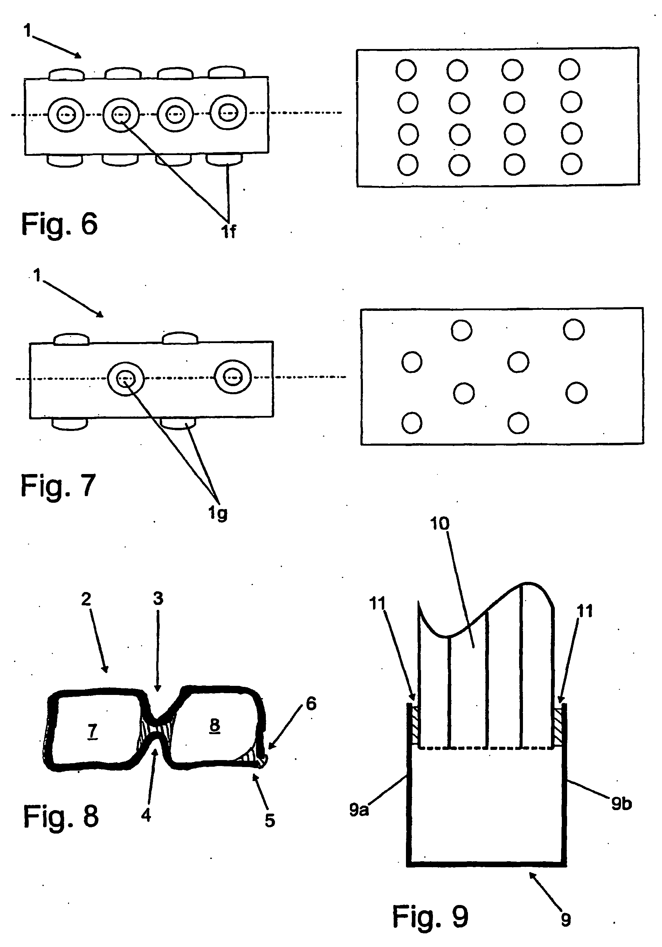

Die Beispiele nach Fig. 6 und Fig. 7 zeigen Ausgestaltungen der Auftragsrolle, bei der die bedruckten Bereiche punkt- bzw. kreisförmig sind. Die vorstehenden Oberflächenstrukturen 1f, 1g der Auftragsrollen sind hierzu mit einer pilzartigen Krümmung versehen und im Querschnitt im wesentlichen kreisförmig.

Vor der Auftragsrolle kann eine Prägerolle angeordnet sein, durch die Strukturen in die Oberfläche des Materialstrangs einprägbar sind. Diese Strukturen sind bezüglich der Führung des Materialstrangs mit der Position der Auftragsrolle verknüpft, so dass eine synchrone Beschichtung mit Flussmittelzusammensetzung lediglich im Bereich der eingeprägten Vertiefungen erfolgt. Typische Prägetiefen können etwa 0,5 µm bis 3 µm sein. Hierbei kann eine Aufbringung von Flussmittelzusammensetzung erfolgen, die lediglich 1 bis 3 g/m² beträgt.

Es ist zu berücksichtigen, dass die für den Lötprozess von plattierten Blechen erforderlichen minimalen Flussmittelmengen sehr gering sind und häufig unter einer Menge von 3-5 g/m² liegen. Bei einem dem Stand der Technik entsprechendem ganzflächigen automatisiertem Auftrag von Flussmittelzusammensetzung sind Schichtstärken von weniger als 3 g/m² bisher nicht auf zuverlässige Weise erzielbar. Zudem trägt Flussmittel, das räumlich zu weit von einer Lötstelle entfernt aufgebracht ist, auch unter Berücksichtigung der Fließeffekte bei Erhitzen im Lötprozess nicht mehr zum Lötprozess bei.

Die mit einer oder mehreren der vorgeschriebenen Auftragswalzen beschichteten plattierten Aluminiumbleche werden nachfolgend abgelängt, wobei der abgelängte Abschnitt mit der Position der aufgebrachten Strukturen synchronisiert ist, falls diese Strukturen nicht ausschließlich aus in Zuführrichtung durchgehenden Streifen bestehen.

Die abgelängten Abschnitte werden nachfolgend auf an sich bekannte Weise umgeformt, z. B. zu Flachrohren mit eingeprägten Sicken. Einen Querschnitt durch ein solches Flachrohr zeigt Fig. 8. Das Rohr hat eine Wandung 2, die aus dem ursprünglichen flachen Blech des Materialstrangs gebogen bzw. umgeformt wurde. In einem mittleren Bereich wurden zwei Sicken 3, 4 eingeprägt, wobei ursprünglich im Bereich der Einprägung eine streifenartige Auftragung der Flussmittelzusammensetzung durch das erfindungsgemäße Verfahren erfolgt war. Ein weiterer Auftrag ist in dünnen Streifen entlang der Ränder des Bleches erfolgt. Nach Umbiegen und Erhitzen des vorgeformten Flachrohres haben sich die aneinander stoßenden Sicken 3, 4 sowie die ursprünglichen Randbereiche 5, 6 jeweils miteinander verlötet. Das Lot ist dabei durch den schraffierten Bereich dargestellt. Erkennbar ist ein Auftrag der Flussmittelzusammensetzung bei diesem Metallteil 2 lediglich im unmittelbaren Bereich der streifenförmigen Lötstellen erforderlich. Die übrigen Innenwandflächen der so gebildeten zwei Kammern 7, 8 des Flachrohres für einen Wärmetauscher sind nicht mit Flußmittel beschichtet, so dass das später durch die Rohre fließende Kühlmittel nicht von dieser Substanz kontaminiert werden kann.

Ein weiteres Beispiel für ein nicht erfindungsgemäßes Metallteil ist ein Sammlerkasten 9 eines Ganzaluminium-Wärmetauschers (siehe Fig. 9). Der in seinem Querschnitt im wesentlichen U-förmige Sammlerkasten 9 hat zwei Schenkel 9a, 9b. Ein Bündel von Tauscherrohren 10 wird lediglich von den äußeren Enden der Schenkel 9a, 9b eingefaßt und flächig mit diesen Endbereichen der Schenkel verlötet. Hierzu wird erfindungsgemäß lediglich in diesen Bereichen eine Flussmittelzusammensetzung automatisiert aufgebracht, mittels der die flächigen Verlötungen 11 erzielt werden. Bei diesem Ausführungsbeispiel kann die Flussmittelzusammensetzung über die Bereiche, in denen sie aufgetragen wird, durchaus Schichtstärken von 30 g/m² aufweisen, da bei der flächigen Verlötung von Sammlerkästen und Tauscherrohrbündeln relativ große Mengen an Lotmaterial benötigt werden. Bei solchen Auftragsstärken von Flussmittelzusammensetzung ergibt sich deutlich, dass im Falle einer vollständigen Beschichtung des Materialstrangs mit Flußmittel (Stand der Technik) erhebliche überschüssige Mengen von Flußmittelzusammensetzung vorhanden wären. Diese würden zu einer Kontamination des Kühlmittels oder Kältemittels führen.

Bei den genannten Beispielen für Wärmetauscher für Kraftfahrzeuge kann es sich insbesondere um Wärmetauscher für einen Motor-Kühlkreislauf oder um Wärmetauscher für eine Klimaanlage handeln.

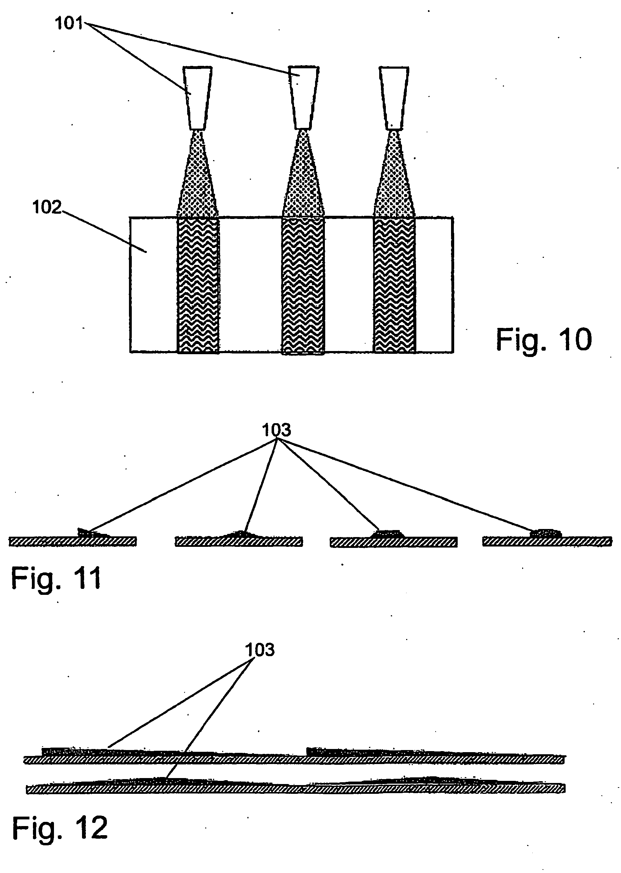

Fig. 10 zeigt ein weiteres Ausführungsbeispiel der Erfindung, bei dem die Auftragsvorrichtung zum Auftrag der Flussmittelzusammensetzung eine oder mehrere Spritzvorrichtungen 101 umfasst. Die düsenartigen Spritzvorrichtungen 101 sind in definiertem Abstand über dem bewegten Materialstrang 102, vorliegend ein Aluminiumband, angeordnet. Eine ausreichend dünnflüssige Mischung der Flussmittelzusammensetzung wird durch die Spritzvorrichtungen 101 aufgespritzt oder aufgesprüht, so dass mehrere parallele Streifen von Flussmittelzusammensetzung auf dem Aluminiumblech entstehen. Das aufgebrachte Muster kann durch Bewegen der Düsen und/oder gezieltes Unterbrechen des Auftrags gestaltet werden. Auch das Vorsehen einer Maske, zum Beispiel ein mit entsprechenden Durchbrechungen versehenes Blech, zwischen Materialstrang 102 und Spritzvorrichtung 101 ist möglich.

Grundsätzlich kann durch die Verwendung einer Spritzvorrichtung jedes der in Fig. 1 bis Fig. 7 für die Verwendung von Auftragsrollen beispielhaft gezeigten Muster der Flussmittelzusammensetzurtg hergestellt werden.

Je nach Anforderungen kann bei einem erfindungsgemäßen Verfahren auch eine kombinierte Verwendung von Auftragsrolle und Spritzvorrichtung vorliegen.

Fig. 11 und Fig. 12 zeigen Schnittdarstellungen durch den mit Flussmittelzusammensetzung 103 beschichteten Materialstrang. Dabei verläuft der Schnitt in Fig. 11 quer zur Zuführ- bzw. Bewegungsrichtung des Materialstrangs und in Fig. 12 längs dazu. Zur Optimierung der jeweiligen Lötstelle und der Verteilung des Lots bzw. Flussmittels beim Erhitzen ist die Auftragsdicke der Flussmittelzusammensetzung vorliegend nicht homogen, sondern gradiert, also in seiner Dicke veränderlich. Fig. 11 und Fig. 12 zeigen rein exemplarisch mögliche Profile einer Gradierung bzw. gewollten Strukturierung des aufgetragenen Flussmittels. Es versteht sich, eine gradierte Auftragung von Flussmittelzusammensetzung sowohl mittels einer Auftragsrolle als auch mittels einer Aufspritzvorrichtung als auch anderer Auftragsverfahren im Sinne der Erfindung möglich sind. Insgesamt wird auf diese Weise durch ein erfindungsgemässes Verfahren zumindest optional ein automatisierter und in drei Raumrichtungen strukturierter Auftrag von Flussmittel ermöglicht.

## Patentansprüche

1. Verfahren zur Herstellung eines Metallteils, umfassend die Schritte
a. Zuführen eines Materiälstrangs aus einem Metall und
b. automatisierter Auftrag einer Beschichtung alls einer Flüßmittelzusammensetzung auf eine Oberfläche des Materialstrangs mittels einer Auftragsvorrichtung (1), wobei
die Flußmittelzusammensetzung mittels der Auftragsvorrichtung (1) nur auf einen definierten Teil der Oberfläche des Materialstrangs aufgebracht wird, **dadurch gekennzeichnet, dass** die Flussmittelzusammensetzung einen metallischen Bestandteil, insbesondere pulverförmiges Metall, oder einen chemisch gebundenen, während des Lötprozesses metallisch werdenden Bestandteil enthält, und dass die Abschnitte und/oder der Materialstrang zu Rohren eines Wärmetauschers (2) umgeformt werden, wobei die Rohre Flachrohre (2) sind, wobei die Flachrohre (2) mit wenigstens einer Sicke oder einem Steg (3, 4) zur Abtrennung separater Kammern innerhalb des Rohres (2) versehen werden, wobei und die Auftragsvorrichtang eine Spritzvorrichtung (101) zum Aufspritzen und/oder Aufsprühen der Flussmittelzusammensetzung auf den Materialstrang (102) umfasst und die Spritzvorrichtung (101) eine Mehrzahl von separat ansteuerbaren Spritzdüsen (101) umfasst.

2. Verfahren nach Anspruch 1, **dadurch gekennzeichnet, dass** die Auftragsvorrichtung eine Auftragsrolle umfasst.

3. Verfahrens nach Anspruch 2, **dadurch gekennzeichnet, dass** die Auftragsrolle (1) eine mit dem definierten Teil der Oberfläche des Materialstrangs korrespondierende Struktur aufweist.

4. Verfahren nach einem der vorhergehenden Ansprüche, **dadurch gekennzeichnet, dass** das Metall des Materialstrangs im wesentlichen eine Aluminiumlegierung ist.

5. Verfahren nach einem der vorhergehenden Ansprüche, **dadurch gekennzeichnet, dass** die Oberfläche des zugeführten Materialstrangs eine zumindest teilweise Plattierung aus einem Lot aufweist.

6. Verfahren nach einem der vorhergehenden Ansprüche, **dadurch gekennzeichnet, dass** der definierte Teil ether Oberfläche wenigstens einen, insbesondere eine Mehrzahl von in Zuführrichtung des Materialstrangs durchgehenden Streifen umfasst und der definierte Teil der Oberfläche wenigstens eine in Zuführrichtung des Materialstranges nicht durchgehende, sich in regelmäßigen Abständen wiederholende Struktur umfasst.

7. Verfahren nach einem der Ansprüche 2. bis 6, **dadurch gekennzeichnet, dass** die definierten Teile der Oberfläche zumindest teilweise als geprägte Vertiefung ausgebildet werden, insbesondere mittels einer der Auftragsrolle (1) vorgeordneten Prägerolle.

8. Verfahren nach einem der vorhergehenden Ansprüche, **dadurch gekennzeichnet, dass** die aufgetragene Flussmittelzusammensetzung (103) zumindest einen gradierten Bereich aufweist.

## Claims

1. A method for producing a metal part, comprising the following steps:
a. feeding a strip of material made of a metal and
b. automatically applying a coating made of a flux composition to a surface of the strip of material by means of an application apparatus (1),
the flux composition being applied by means of the application apparatus (1) only to a defined part of the surface of the strip of material, **characterized in that** the flux composition contains a metallic constituent, in particular powdery metal, or a chemically bound constituent which becomes metallic during the soldering process, and the sections and/or the strip of material are formed to produce tubes of a heat exchanger (2), wherein the tubes are float tubes (2), wherein the flat tubes (2) are provided with at least one bead or web (3, 4) to produce separate chambers within the tube (2), wherein the application apparatus comprises a spray apparatus (101) for squirting and/or spraying the flux composition onto the strip of material (102) and the spray apparatus (101) comprises a plurality of separately controllable spray nozzles (101).

2. The method as claimed in claim 1, **characterized in that** the application apparatus comprises an application roll.

3. The method as claimed, in claim 2, **characterised in that** the application roll (1) has a structure that corresponds to the defined part of the surface of the strip of material.

4. A method as claimed in any one of the preceding claims, **characterized in that** the metal of the strip of material is substantially an aluminum alloy.

5. A method as claimed in any one of the preceding claims, **characterized in that** the surface of the strip of material that is fed is plated at least partly with a solder.

6. A method as claimed in any one of the preceding claims, **characterised in that** the defined part of the surface comprises at least one, in particular a plurality of, continuous stripes in the feed direction of the strip of material and the defined part of the surface comprises at least one structure that recurs at regular intervals and is not continuous in the feed direction of the strip of material.

7. A method as claimed in any one of claims 2 to 6, **characterized in that** the defined parts of the surface are produced ant least partly has embossed depressions, in particular by means of an embossing roll connected upstream of the application roll (1).

8. A method as claimed in any one of the preceding claims, **characterized in that** the applied flux composition (103) has at least one graded region.

## Revendications

1. Procédé de fabrication d'une pièce métallique, comprenant les étapes consistant:
a. à procéder à l'alimentation d'un cordon de matière se composant d'un métal, et
b. à effectuer l'application automatisée, sur une surface du cordon de matière, au moyen d'un dispositif d'application (1), d'un revêtement constitué d'une composition de fondants,
où la composition de fondants est appliquée, au moyen du dispositif d'application (1), seulement sur une partie définie de la surface du cordon de matière,
**caractérisé en ce que** la composition de fondants contient un composant métallique, en particulier un métal en poudre, ou bien un composant combiné chimiquement, devenant métallique au cours du processus de brasage, et **en ce que** les sections et / ou le cordon de matière sont transformés en tubes d'échangeur de chaleur (2), où les tubes sont des tubes plats (2), où les tubes plats (2) sont dotés d'au moins une moulure ou d'une nervure (3, 4) servant à la séparation de chambres distinctes à l'intérieur du tube (2), et où le dispositif d'application comprend un dispositif de pulvérisation (101) servant à appliquer, au pistolet et / ou par pulvérisation, la composition de fondants sur le cordon de matière (102) et le dispositif de pulvérisation (101) comprend une pluralité de buses de pulvérisation (101) pouvant être commandées séparément.

2. Procédé selon la revendication 1, **caractérisé en ce que** le dispositif d'application comprend un rouleau d'application.

3. Procédé selon la revendication 2, **caractérisé en ce que** le rouleau d'application (1) présente une structure correspondant à la partie définie de la surface du cordon de matière.

4. Procédé selon l'une quelconque des revendications précédentes, **caractérisé en ce que** le métal du cordon de matière est essentiellement un alliage d'aluminium.

5. Procédé selon l'une quelconque des revendications précédentes, **caractérisé en ce que** la surface du cordon de matière fourni présente un placage au moins partiel, réalisé à partir d'une brasure.

6. Procédé selon l'une quelconque des revendications précédentes, **caractérisé en ce que** la partie définie de la surface comprend au moins une bande, en particulier une pluralité de bandes continues dans à direction d'alimentation du cordon de matière, et la partie définie de la surface comprend au moins une structure non continue dans la direction d'alimentation du cordon de matière, se répétant à intervalles réguliers.

7. Procédé selon l'une quelconque des revendications 2 à 6, **caractérisé en ce que** les parties définies de la surface sont configurées au moins partiellement comme un creux gaufré, réalisé en particulier au moyen d'un rouleau de gaufrage disposé en amont du rouleau d'application (1).

8. Procédé selon l'une quelconque des revendications précédentes, **caractérisé en ce que** la composition de fondants (103) appliquée présente au moins une zone graduée.
